# EUROPEAN PATENT APPLICATION

(11) **EP 3 266 515 A1**
(43) Date of publication of application: **10.01.2018**
(21) Application number: 16177829.5
(22) Date of filing: 04.07.2016
(51) Int. Cl.: B01D 63/04, B01D 65/08, C02F 3/12

(54) **SUBMERGED MEMBRANE MODULES FORMED WITH PATTERNED MEMBRANE ARRAYS OF VERTICALLY ALIGNED HOLLOW FIBERS**

(71) Applicant: OxyMem Limited, Athlone Co. Westmeath (IE)
(72) Inventor: Semmens, Michael, St. Paul, MN 55105 (US); Syron, Eoin, Co. Wicklow (IE)
(74) Representative: Reedy, Orlaith

(57) **Abstract**

A modular membrane array for use in water treatment or wastewater treatment systems, the array comprising two or more patterned cassettes (10) aligned in parallel, each cassette comprising a bunch of vertically aligned, hollow fibre membranes (2), each membrane defining a lumen configured to contain a fluid, wherein the alignment of the two or more cassettes in parallel forms a uniform distribution of substantially enclosed vertical channels that are open and free of hollow fibre membranes.

## Description

### Field of the Invention

The invention relates to submerged membrane modules suitable for use in gas delivery or water filtration in bioreactors used to treat water or wastewater. In particular, the invention relates to a membrane module design which provides enhanced mass transfer during water and wastewater treatment.

### Background

An increasing world population and limited water resources are requiring higher levels of wastewater treatment, and increasing levels of water re-use. Space for wastewater treatment is at a premium in fully developed communities, so higher levels of treatment must often be achieved in the same or less space. At the same time, the global warming issue is forcing wastewater treatment facilities to reduce energy consumption. This water-energy nexus is driving innovation in wastewater treatment technology, and creating a boom in membrane bioreactor technologies for wastewater treatment.

### Application to submerged Membrane Filtration processes

When porous membranes are used for the filtration of water, a pressure difference between the water in which the module is submerged and the lumen of the hollow fibers encourages water to flow through the porous walls of the membrane into the lumen of fibers. This outside-in filtration creates a clean, particle free water within the lumen which is termed "the permeate'. This permeate, withdrawn through the upper and lower manifolds, comprises the treated water.

During filtration, the particulates, colloids, large molecular weight compounds and microorganisms, which are retained by the membrane, tend to concentrate at the external membrane surface. This phenomenon is often referred to as concentration polarization. It is important that the external water is well mixed, and that the mixing conditions, which create good fluid flow past the surface of the membranes, encourage removal of the retained contaminants from the surface of the membrane. When poor mixing conditions and low shear conditions prevail, a high concentration of contaminants, particles and microorganisms develop around the membranes. If these conditions are allowed to happen, and the concentration polarization is severe, then contaminants, solids and microorganisms rapidly attach to the membrane surface, which causes the external surface of the membranes to become coated in a chemical/biological layer that impedes filtration. These contaminants may also penetrate into the membrane pores and cause pore blockage. These combined processes are referred to as membrane fouling. Fouling is an expensive problem since it reduces the filtration performance of the membrane and contributes to reduced membrane life. Fouled membranes must be taken out of service and chemically cleaned to remove the foulant layer, which increases the operating costs of the process. Good mixing conditions can substantially reduce fouling. The high shear conditions created by aeration reduce the boundary layer around the membrane, reduce concentration polarization, and encourage back diffusion of these contaminants into the bulk water.

Typically, to minimize fouling in submerged membrane filtration modules, coarse bubble aeration is used to create turbulence and promote vigorous mixing within the membrane modules. Coarse bubble aerators are installed below the membrane modules and continuous or intermittent aeration is used for fouling control. Many commercial membrane filtration modules are in use throughout the world using this technology.

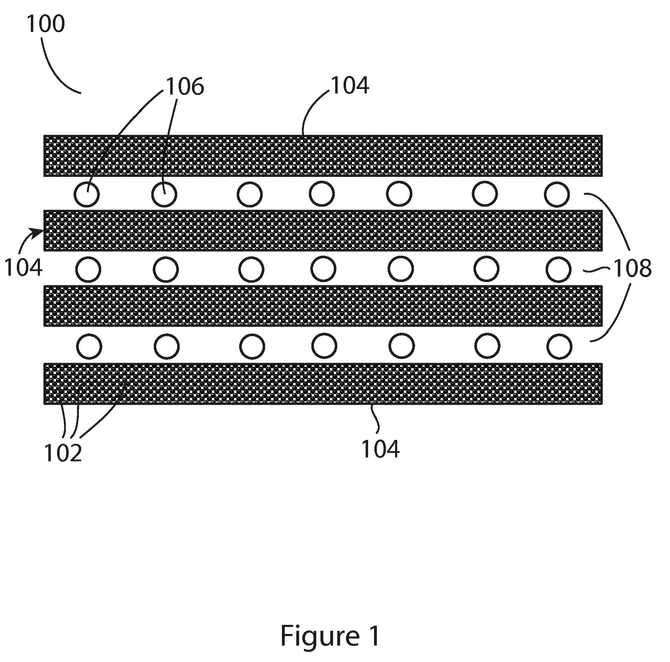

**Figure 1** illustrates a plan view of a conventional type of membrane array that is commonly used in many membrane bioreactors for wastewater treatment, and is generally referred to by reference numeral 100.

The membrane array 100 comprises linear manifolds 104 potted with vertically aligned membranes 102 that are assembled in parallel with channels 108 between them to allow for water movement through the membrane array 100. Aerators 106 placed below the membrane array 100 release air bubbles, which rise within these channels 108 and provide the mixing and the shear conditions required to achieve reasonable process performance.

The problem with the prior art and current commercial membrane module designs is that the cleaning provided by coarse bubble aeration is non-uniform and energy intensive. In prior art, such as in US Patent No. 6, 325, 928 entitled "Immersed membrane element and module", the design of the membrane modules and aeration devices has been relatively simplistic. The bubble membrane contact with the membranes is poorly controlled and the shear conditions experienced by the membranes within the module are not uniform. The energy costs associated with providing coarse bubble aeration to control membrane fouling are very high.

In summary, there is a need for an improved, less energy intensive, membrane module/aerator design, which can provide effective fouling control and improve process performance. To do this it must:
1. Provide adequate mixing around each and every fiber in the bioreactor so that the accumulation of contaminants and solids at the membrane surface, and membrane fouling is minimized.
2. Periodically increase the shear level, in a controlled way, to strip any accumulated solids from the membrane surface and to disrupt concentration polarization.
3. Accomplish this uniformly throughout the membrane module so that each and every membrane is working effectively and overall process performance is optimized.
4. Minimize the energy consumption and operating costs associated with the process.

### Application to Membrane Aerated Biofilm Reactors

Membrane aerated Biofilm Reactors (MABRs) are bioreactors in which oxygen is supplied to wastewater via submerged hollow fiber membrane modules. The hollow fiber membranes are made of a hydrophobic porous or alternatively gas permeable material (e.g. polydimethylsiloxane, polymethylpentene). Air, oxygen-enriched air, or pure oxygen may be supplied to the inside of the hollow fiber membranes, which allows oxygen to diffuse through the membranes and dissolve into the water at the outside membrane-water interface. Oxygen flux across the membrane is proportional to the concentration gradient of oxygen across the membrane so that a high flux can be achieved by operating with high oxygen partial pressures inside the membrane and very low dissolved oxygen concentrations at the outside surface of the membrane.

The oxygen-rich surface of the hollow fiber membranes, which is in contact with wastewater containing biodegradable organic and inorganic contaminants, provides an ideal environment for aerobic bacterial growth. Bacteria growing here receive the oxygen they require via diffusion through the membrane, and the substrates they need via diffusion from the surrounding wastewater. As a result, bacteria naturally colonize the surface of oxygen permeable membranes and a biofilm forms on the outside of the hollow fibers.

The activity of this biofilm around the hollow-fibers has a profound influence on the flux of oxygen through the membrane as the bacteria consume oxygen and influence the concentration gradient across the membrane wall. Since the bacteria in the biofilm require both nutrients from the wastewater and the oxygen from the membrane, the activity of the bacteria is greatest when both dissolved oxygen and substrate concentrations are high. The activity of the bacteria may be limited either by a low dissolved oxygen concentration, which is controlled by the rate of diffusion oxygen across the membrane, or by a low dissolved substrate concentration, which is controlled by the rate of diffusion of substrates into the biofilm from the wastewater.

As the biofilm becomes thicker, the bacteria growing close to the membrane experience an abundant supply of dissolved oxygen but a decreasing concentration of substrate, which must diffuse from the wastewater through the increasingly thick outer layers of the biofilm. Correspondingly, bacteria in the outer layers of the biofilm experience higher substrate concentrations but a decreasing dissolved oxygen concentration. Eventually, bacteria on the outer surface of the biofilm, in contact with the wastewater, receive no oxygen at all. In this way the biofilm transitions from aerobic to anoxic to anaerobic as the distance from the membrane surface increases. This stratification of the biofilm allows nitrification and denitrification to occur simultaneously with the organic biodegradation processes within the biofilm; an important advantage of this process.

The thickness of the biofilm, and the biological activity within the biofilm, control the oxygen flux transfer across the membrane wall and the rate of substrate oxidation. While controlling the oxygen partial pressure within the fibers is easily accomplished by manipulating the flow rate of gas to the membrane modules, controlling the biofilm to optimize process performance is more complicated.

There is an optimum biofilm thickness, which provides maximum oxygen transfer rates and process performance. When a biofilm starts to grow it actually accelerates the process of oxygen transfer across the membrane. Clean membranes transfer oxygen poorly under the low flow conditions typical in wastewater treatment because they are limited by diffusion through the external liquid boundary layer, but as the biofilm develops the bacteria deplete the dissolved oxygen concentration close to the membrane surface, and this effectively increases the concentration gradient across the membrane wall, promoting faster oxygen diffusion. For this reason, it is important that a biofilm is always maintained on the outside of the hollow fiber membranes. On the other hand, it is important to ensure that the biofilm is not allowed to grow too thick. The mixing conditions provided in the bioreactor must ensure that substrate is delivered efficiently to the outside of the biofilm, and from time to time the level of mixing must be increased to shear some but not all of the biofilm off of outside of the hollow fibers. The roughness and topography of the membrane surface, and the character of the biofilm, control the thickness of the biofilm remaining on the cleaned membrane.

A high shear condition to remove biofilm from the membranes is usually accomplished using aeration. Air diffusers are installed below the membrane modules and aeration is provided from time to time to create turbulent conditions within the membrane module. Large bubbles rising through the membrane module generate a high level of local turbulence, which is intended to shear the external layers of the biofilm from the membrane.

As noted above for membrane filtration applications, coarse bubble aeration is non-uniform and energy intensive. In these existing systems, the design of the membrane modules and aeration devices has been relatively simplistic. The bubble contact with the membranes is poorly controlled and the shear conditions experienced by the membranes within the module are not uniform. As a result these existing energy intensive designs are not suitable for control of the biofilm thickness in an MABR.

In summary, the challenges for the optimization of process performance in MABRs are:
- Provide adequate mixing to ensure good substrate delivery to the biofilms surrounding each and every fiber in the bioreactor.
- Periodically increase the shear level, in a controlled way, to strip some of the biofilm from the hollow fibers and maintain the thickness of the biofilm surrounding the membranes in the optimum range.
- Accomplish this uniformly throughout the membrane module so that each and every membrane is working effectively and overall process performance is optimized.
- Minimize the energy consumption and operating costs associated with the process.

There is a need for an improved, less energy intensive, membrane module/aerator design, which can provide effective fouling control and good process performance.

### Summary of the Invention

The object of the present invention is to provide modular membrane arrays, which more efficiently capture the energy dissipation of rising bubbles, and better control the local shear flow conditions around and experienced by vertically aligned, hollow-fiber membranes during water and wastewater treatment.

Submerged hollow fiber membrane modules, comprised of vertically aligned hollow-fiber membranes, are installed within bioreactors for the treatment of water and wastewater. These membranes include membranes used for water purification by filtration, such as the range of porous membranes used for microfiltration, ultrafiltration or nano-filtration; they also include gas-permeable membranes which are used for water purification by supplying gases to foster biological treatment processes; these membranes may be porous, non-porous or composite in character, having both porous and non-porous wall elements.

According to the present invention, there is provided, as set out in the appended claims, a modular membrane array for use in water treatment or wastewater treatment systems, the array comprising two or more cassettes aligned in parallel, each cassette comprising a bunch of vertically aligned, hollow fiber membranes, each membrane defining a lumen configured to contain a fluid; wherein the alignment of the two or more cassettes in parallel forms substantially enclosed vertical channels that are open and free of hollow fibre membranes.

In one embodiment, the array of vertically aligned, hollow fiber membranes form walls which separate the substantially enclosed vertical channels.

In one embodiment, each of the two or more cassettes have a pleated, ridged, angular, or undulating shape.

In one embodiment, the two or more cassettes are complementary to each other.

In one embodiment, the modular membrane further comprises a housing, wherein each cassette further comprises an upper manifold attached to the housing and a lower manifold attached to the housing and wherein the membranes are further attached to moulded connectors, each moulded connector being attached to the upper and the lower manifolds.

In one embodiment, each cassette comprises a plurality of patterned membrane elements arranged in sequence along the upper and lower manifolds, wherein each patterned membrane element comprises a bunch of membranes, consisting of a plurality of hollow membranes attached to the moulded connectors.

In one embodiment, each cassette comprises a continuous collection of single bunches of membranes fixed along the entire length of the upper and lower moulded connectors that are attached to the upper and lower manifolds and run their entire length.

In one embodiment, an air delivery system is configured to deliver air bubbles into the substantially enclosed vertical channels.

In one embodiment, the air delivery system is placed at or close to a base of the modular membrane array so as to release air bubbles at or below the base of each of the vertical channels within the modular membrane array and to provide uniform mixing conditions throughout the modular array.

In one embodiment, the air delivery system controls the air flow to adjacent vertical channels so that the size and frequency of bubbles formed in adjacent vertical channels can be manipulated to control of shear flow conditions experienced by the hollow fiber membranes comprising the walls of the channels.

In one embodiment, the substantially enclosed vertical channels are evenly spaced and uniformly distributed.

In one embodiment, the substantially enclosed vertical channels bounded on all sides by the walls of vertically aligned, hollow fiber membranes can be square, triangular, circular, elliptical, trapezoidal, polygonal or any other similar shape.

In one embodiment, the bunch of membrane fibres arranged in the modular membrane array are tightly potted or spaced apart to form the wall to encourage water flow through the wall and between the membranes.

In one embodiment, the thickness of the wall is determined by the number, spacing, and diameter of the hollow membrane fibers separating adjacent channels, and the size of the channels so formed.

In one embodiment, the membrane fiber walls separating adjacent vertical channels measure between 1mm and 40mm in thickness.

In one embodiment, the diameter of the hollow fiber membranes ranges from 40 microns to 4mm, and the length of the hollow fiber membranes ranges from 300mm to 4m.

In one embodiment, the distance the membrane fibers are held apart when naturally hanging by their own weight is adjustable between 90% and 120% of their length.

Preferably, the distance the membrane fibers are held apart when naturally hanging by their own weight is adjustable between 95% and 115% of their length.

More preferably, the distance the membrane fibers are held apart when naturally hanging by their own weight is adjustable between 98% and 110% of their length.

In one embodiment, the equivalent diameter of the substantially enclosed vertical channels created within the array is any value greater than 9mm and less than 130 mm.

In one embodiment, the hollow fiber membranes include individual hollow fibers which are bound, wrapped, or reinforced to strengthen the fibres or to improve biofilm adhesion to the surface of the membranes.

In one embodiment, the hollow fiber membranes include individual hollow fibers modified to incorporate spacers for maintaining a space between the membranes forming the walls of the array so as to enhance water flow through the walls and provide space for biofilm growth.

In one embodiment, the lumen of the vertically aligned, hollow fiber membranes are in fluid communication with the upper and lower manifolds.

In one embodiment, either one of the upper or lower manifolds, or both, are used to supply air, oxygen enriched air, oxygen, hydrogen, methane, carbon dioxide, or any other gas to the lumen of membrane fibers.

In one embodiment, the upper or lower manifolds, or both, are used to collect permeate water from the lumen of the membrane fibres.

The present invention also provides a membrane-aerated biofilm reactor (MABR) of the type used to treat water or wastewater comprising a tank comprising at least one modular array used to supply oxygen and at least one aerator.

The present invention also provides membrane filtration bioreactor (MFBR) of the type used to treat water or wastewater comprising a tank and at least one modular array used for filtration and at least one aerator.

In the specification, the term "Membrane Aerated Biofilm Reactor (MABR)" should be understood to mean a membrane supported biofilm reactor (MSBR) for treating wastewater liquids. The treatment is to remove carbonaceous pollutant, nitrify/denitrify the pollutants, and/or perform xenobiotic biotreatment of the wastewater constituents. The treatment may use an air/oxygen/hydrogen/methane/carbon dioxide (gas) permeable membrane (often a hollow fibre membrane) that provides an interface between the fluid to be treated (fluid phase) and an air/oxygen/hydrogen/methane/carbon dioxide supply (gas phase). Soluble organic and inorganic compounds in the liquid are supplied to the biofilm from the biofilm-liquid interface, whereas air/oxygen/hydrogen/methane is supplied to the biofilm from the biofilm-membrane interface (by diffusing through the membrane). Typically, a biofilm consisting of a heterogeneous population of bacteria (which may include nitrifying, denitrifying, and heterotrophic bacteria) grows on the fluid phase side of the membrane.

MABRs can achieve bubble-less aeration and high oxygen utilization efficiency (up to 100%) and the biofilm can comprise aerobic/anoxic/anaerobic zones to simultaneously achieve removal of carbonaceous organic pollutants, as well as nitrification and denitrification in a single biofilm. An example of MABRs of the type comprising a lumen containing a gas phase, a liquid phase, and a gas permeable membrane providing an interface between the gas and liquid phases are described by European Patent No. 2 361 367 (University College Dublin).

In the specification, the term "tank" should be understood to mean a holding vessel within which is placed the modular membrane array.

In the specification, the term "housing" should be understood to mean the frame which holds an assemblage of patterned membrane cassettes and fixes their parallel alignment to form a membrane array.

In the specification, the term "patterned modular cassette" should be understood to mean a linear arrangement of patterned membrane elements, each patterned membrane element consisting of a bunch of membrane fibres. The number of patterned membrane elements comprising a patterned cassette can be any number selected from 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76,. 77, 78, 79, 80, 81, 82, 83, 84, 85, 86, 87, 88, 89, 90, 91, 92, 93, 94, 95, 96, 97, 98, 99, or 100 membrane elements.

In the specification, the terms "upper manifold" and "lower manifold" should be understood to mean air manifolds connected to either ends of the hollow fibre membranes. The manifolds provide a means to supply and remove the gas to/from the lumen of the membranes. If the fibres are placed in the vertical orientation, the manifolds are then in the upper and lower portions of the patterned cassettes.

In the specification, the term "patterned continuous cassette" should be understood to mean an arrangement of a single bunch of membrane fibres, consisting of one of more rows of fibres, potted directly into the patterned upper and lower manifolds. The bunch of membranes is potted across the entire length of the upper and lower manifolds.

In the specification, the term "patterned cassette" should be understood to mean either a "patterned modular cassette" or a "patterned continuous cassette".

In the specification, the term "pleated" should be understood to mean a fold of definite, even width made by changing the direction of fold so that the sum of angular change in two adjacent folds is equal to 360 degrees.

In the specification, the term "ridged" should be understood to mean a linear arrangement of right-angled membrane elements aligned so as to form a continuous linear pattern of membranes along the length of the manifolds and regular projections of membranes to one side and normal to the length of the manifolds.

In the specification, the term "angular" should be understood to mean where the patterned cassette has a pleated pattern but the angle of the pleats are not right angles.

In the specification, the term "undulating" should be understood to mean a sinuous or wavelike shape.

In the specification, the term "substantially enclosed, vertical channel" should be understood to mean channels formed on all sides with a wall of membrane fibres from the patterned cassettes that provide clear paths for the flow of water through the modular membrane array, and a preferred pathway for bubbles to rise within the modular membrane array when aerated from beneath. The membranes of one patterned cassette abut those of the proximal cassettes, forming a substantially closed space. However, the skilled person would understand that some small openings or regions of lower fiber density may occur in regions of the assembled membrane array module, and may be tolerated without a significant loss in process performance.

In the specification, the term "complimentary" should be understood to mean of similar shape, or a shape that compliments another so as to form channels that provide clear paths for the flow water through the modular membrane array, and a preferred pathway for bubbles to rise within the modular array when aerated from beneath when the patterned cassettes are aligned in parallel.

In the specification, the term "vertical" should be understood to mean substantially vertical or near vertical.

### Brief Description of the Drawings

The invention will be more clearly understood from the following description of an embodiment thereof, given by way of example only, with reference to the accompanying drawings, in which:-
**Figure 1** illustrates a plan view of a conventional type of membrane array that is commonly used in many membrane bioreactors for wastewater treatment;

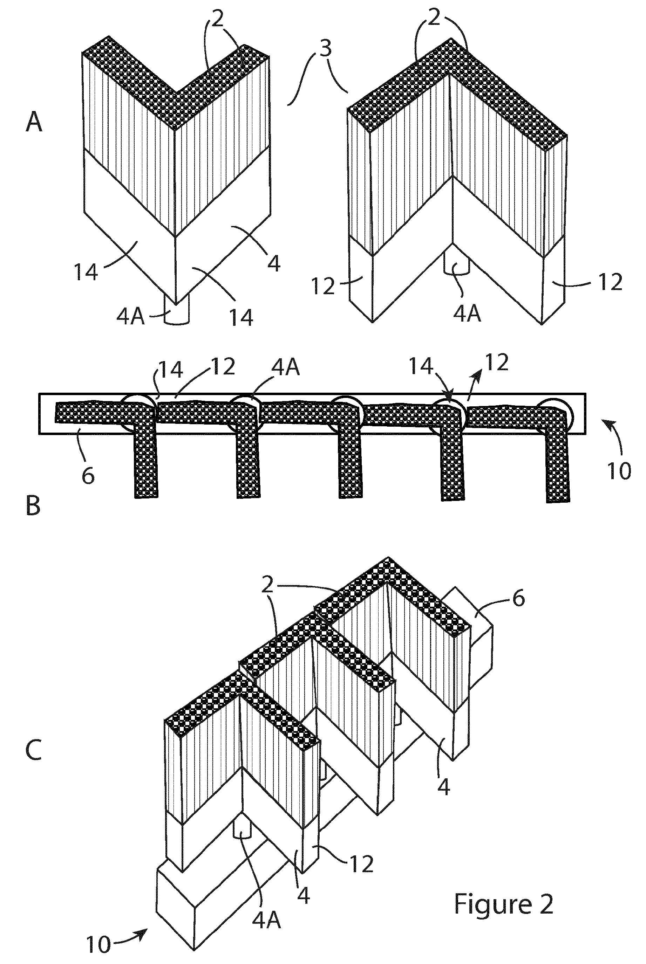

**Figure 2A** illustrates a side elevation view of one embodiment of a single patterned membrane element of the invention, **Figure 2B** illustrates a plan view of one embodiment of a linear arrangement of membrane elements forming a patterned modular cassette and **Figure 2C** is a side elevation view of the patterned modular cassette of **Figure 2B****;**

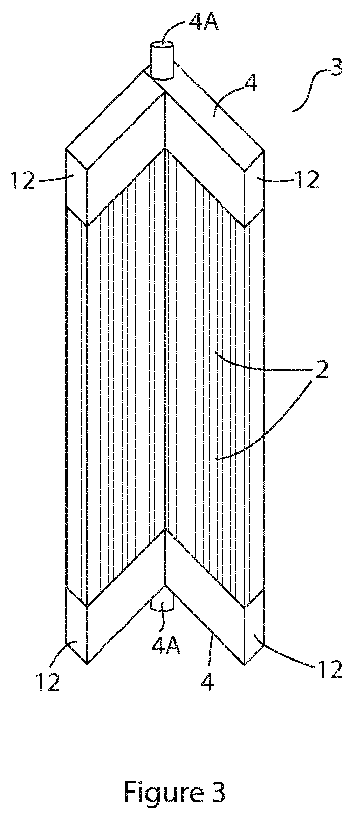

**Figure 3** shows a side elevation of one embodiment of a complete patterned membrane element;

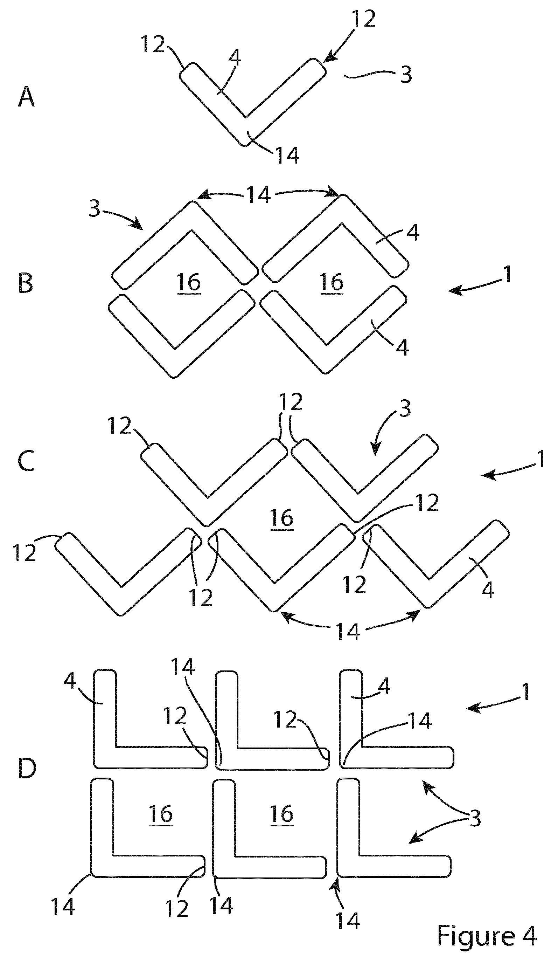

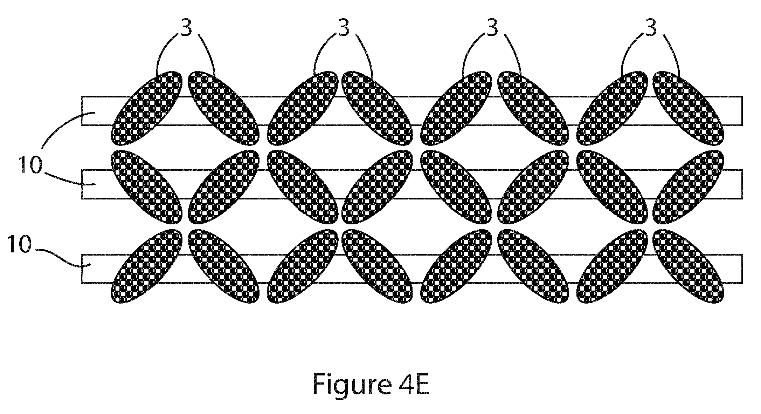

**Figure 4A** shows a plan view of the patterned membrane element of **Figure 2A****,** and **Figures 4B, 4C, 4D** **and** **4E** show plan views of different possible configurations of patterned modular cassettes arranged in parallel which can form the modular membrane array of the present invention;

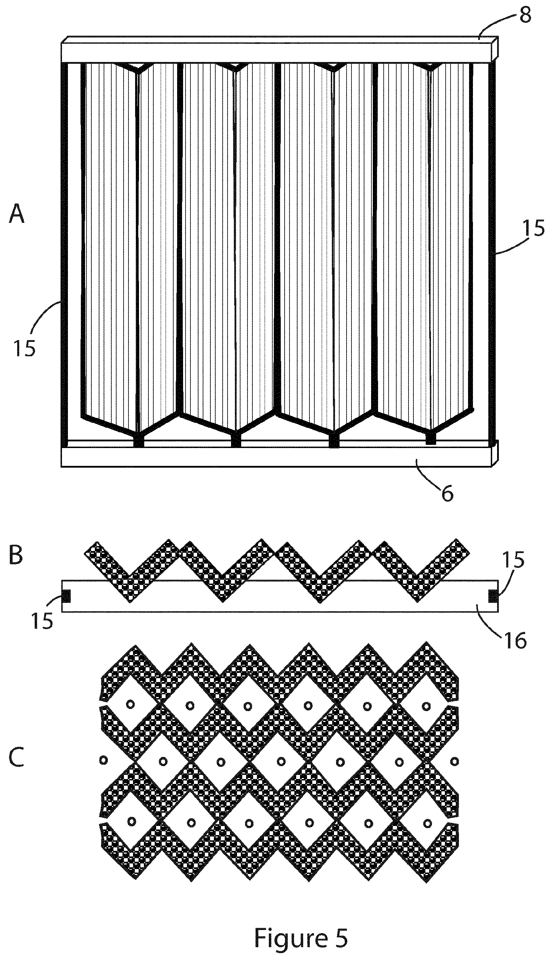

**Figure 5A** illustrates a side elevation of one embodiment of a patterned membrane cassette; **Figure 5B** shows a plan view of the patterned membrane elements of the patterned membrane cassette of **Figure 5A** potted into a lower manifold, and **Figure 5C** shows a plan view of one embodiment of the modular membrane array of the invention where the modular membrane array is an angular membrane module array formed from the patterned membrane cassettes of **Figure 5A****;**

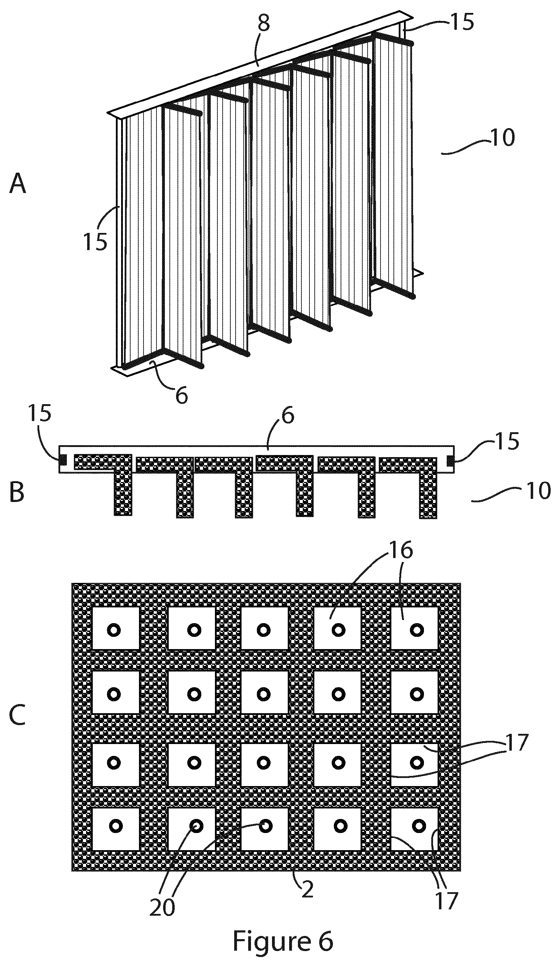

**Figure 6A** illustrates a side elevation of another embodiment of a patterned membrane cassette; **Figure 6B** shows a plan view of the patterned membrane elements of the patterned membrane cassette of **Figure 6A** potted into a lower manifold and **Figure 6C** shows a plan view of one embodiment of the modular membrane array of the invention where the modular membrane is a ridged membrane module array formed from the patterned membrane cassettes of **Figure 6A****;**

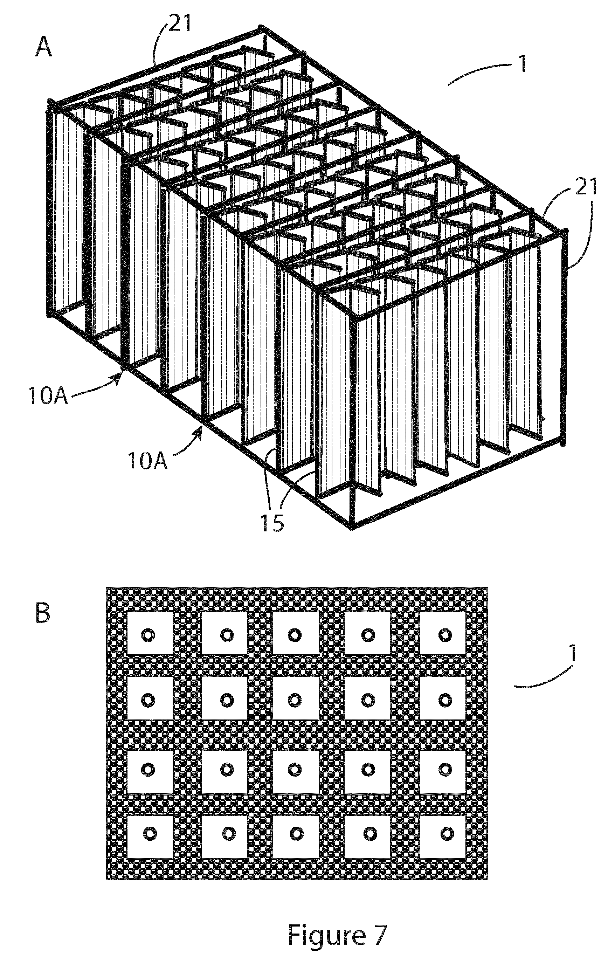

**Figure 7A** shows a side elevation of the patterned modular cassettes aligned in parallel to form a modular membrane array of the invention and installed in a housing, while **Figure 7B** shows a plan view of the modular membrane array of **Figure 7A****;**

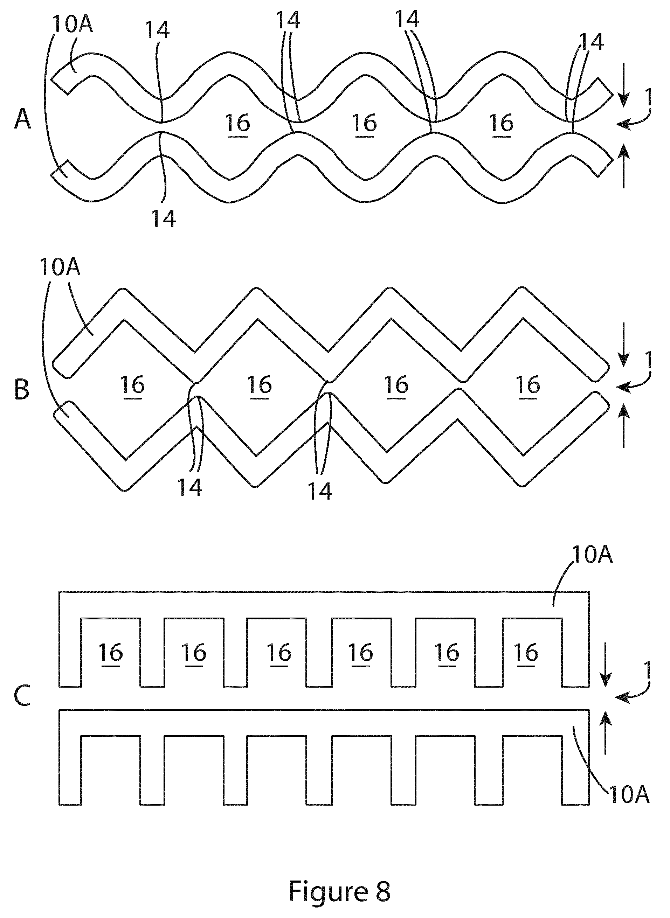

**Figure 8A** shows a plan view of one embodiment of a pair of patterned continuous cassettes shaped to form an undulating pattern and arranged in parallel to form one embodiment of the modular membrane array of the present invention, **Figure 8B** shows a plan view of another embodiment of a pair of patterned continuous cassettes shaped to form a pleated pattern and arranged in parallel to form another embodiment of the modular membrane array of the present invention, and **Figure 8C** shows a plan view of yet another embodiment of a pair of continuous patterned continuous cassettes shaped to form a ridged pattern and arranged in parallel to form another embodiment of the modular membrane array of the present invention; and

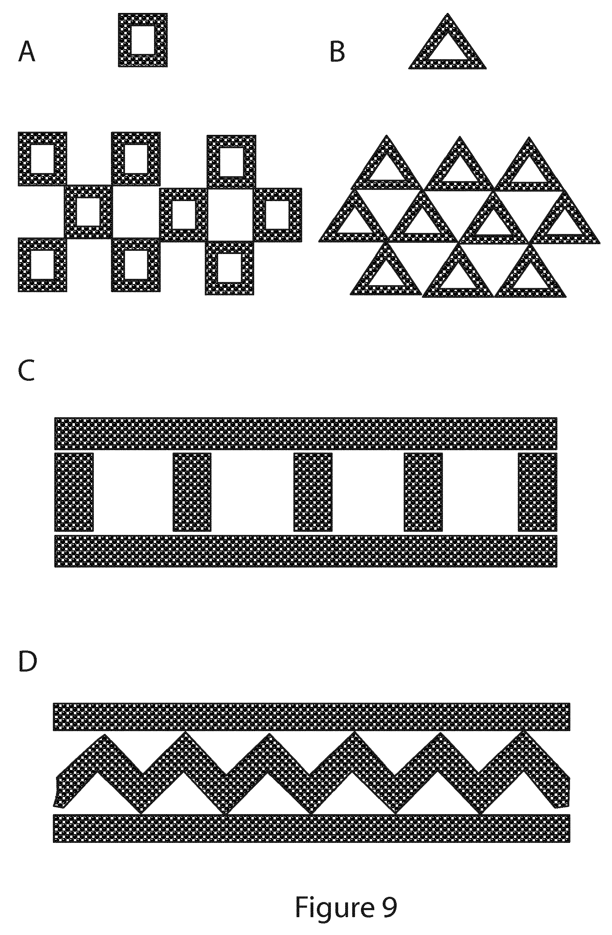

**Figure 9A** shows one embodiment of the patterned membrane element where the membrane element is square, and staggered at an even distance along the linear membrane cassettes, so as to create a uniform distribution of square, fiber-free, vertical channels **Figure 9B** shows another embodiment of the patterned membrane element where the membrane element is triangular, and staggered at an even distance along the linear membrane cassettes, so as to create a uniform distribution of triangular, fiber-free, vertical channels **Figure 9C** shows how conventional linear membrane cassettes could be modified to include evenly spaced linear membrane elements, arranged normally to, and staggered at an even distance along the linear membrane cassettes, so as to create a uniform distribution of square, fiber-free, vertical channels, and **Figure 9D** shows how conventional linear membrane cassettes could be alternated with patterned pleated membrane cassettes so as to form a uniform membrane array of triangular vertical, fiber-free channels.

### Detailed Description

The modular membrane array of the invention, which is generally referred to by reference numeral 1, will now be described with reference to Figures 2 to 9.

The modular membrane array 1 comprises two or more patterned cassettes 10 aligned in parallel, each cassette comprising a bunch of vertically aligned, hollow fiber membranes 2, wherein the alignment of the two or more cassettes in parallel forms substantially enclosed vertical channels that are open and free of hollow fibre membranes.

In one embodiment of the invention, the patterned cassette 10 comprises a patterned modular cassette comprising a plurality of patterned membrane elements 3 attached or potted to manifolds 6, 8 to create a linear arrangement of membrane elements, as shown in Figures 6A and 6B. Each membrane element 3 comprises a bunch of vertically aligned, hollow fiber membranes 2 fixed to upper and lower moulded connectors 4, where each hollow fiber membrane 2 defines a lumen configured to contain a liquid or gas phase, as shown in Figure 3. The moulded connector 4 is attached to the upper manifold 6 and the lower manifold 8 by means of a hollow tubular fitting 4A which can be connected to the manifold by a fitting mechanism or direct adhesion.

In the embodiment of Figures 2B, 2C, 6A and 6B, the cassette 10 is arranged such that an edge 12 of the moulded connector 4 associated with one membrane element 3 comes into contact with the apex 14 of the moulded connector 4 associated with a proximal membrane element 3 in the cassette 10. A cassette 10 may have vertical stabilizing bars 15, which hold the upper 8 and lower manifolds 6 at a fixed distance of separation, and provide the cassette 10 with structural stability, or the upper manifold 8 and the lower manifold 6 may be held apart via an external ridged frame.

In one embodiment of the modular membrane array 1 of the invention, a collection of cassettes 10 are aligned in parallel to each other so that the edge 12 of a moulded connector 4 of one cassette 10 comes into contact with the apex 14 of a proximal moulded connector 4 of a second cassette 10, such that substantially enclosed, uniformly distributed, vertical channels 16, which are open and free of hollow fiber membranes 2, are formed. This embodiment is shown in Figures 4C, 4D, 5C, 6C and 7.

Figure 4E shows an alternative embodiment of the modular membrane array 1 of the invention, wherein the patterned modular cassettes 10 comprise a plurality of linear membrane elements 3. These membrane elements 3 are oriented along the length of a cassette 10 at an angle of substantially 45 degrees such that the end of one moulded connector 4 comes into contact with the proximal end of its adjacent moulded connector 4, such that when the cassettes 10 are aligned in parallel to each other they can form substantially enclosed, uniformly distributed, vertical channels 16, which are open and free of hollow fiber membranes 2.

In an alternative embodiment of the modular membrane array 1 of the invention, a collection of pairs of cassettes 10 can be aligned in parallel to each other so that the edge 12 of the moulded connector 4 of one patterned cassette 10 comes into contact with the edge 12 of a proximal moulded connector 4 of a second patterned cassette 10, such that substantially enclosed, uniformly distributed, vertical channels 16, which are open and free of hollow fiber membranes 2, are formed, as shown in Figure 4B. Furthermore, where the modular membrane array 1 of this embodiment is formed by pairs of continuous patterned cassettes, the apex 14 of one moulded connector 4 of one continuous cassette 10A comes into contact with the apex 14 of the moulded connector 4 of an adjacent continuous cassette 10A. Figure 7A shows the cassettes 10 aligned in parallel and installed in a housing 21 so that the membranes of one cassette are just touching the membranes of the adjacent cassettes.

Each enclosed channel 16 represents a tubular element, with the hollow fiber membranes 2 forming the walls of the channel 16. These vertical channels 16 may be square, triangular, circular, elliptical, polygonal or similar shape in cross-section, but will take the form of the shape of the aligned complimentary cassettes 10 when arranged parallel to each other. The important feature of the modular membrane array 1 is that adjacent vertical channels 16, which are completely surrounded by walls of hollow fiber membranes 2, are created uniformly when the cassettes 10, comprising the modular array 1 are aligned and assembled in parallel to each other.

In an alternative embodiment of the invention where the patterned cassette 10 comprises a patterned continuous cassette, the cassette 10 formed from a continuous row of a plurality of bunches of vertically aligned, hollow fiber membranes 2, each end of which are potted directly into a single moulded connector, or directly into patterned sets of upper and lower manifolds. Generally, the cassettes 10a are affixed to upper and lower manifolds or comprise part of the upper or lower manifolds.

When a pair of complimentary continuous cassettes 10a are aligned in parallel to each other as shown in Figures 8A to 8C, they form the modular membrane array 1 of the invention, and thus provide substantially enclosed, uniformly distributed, vertical channels 16 which are open and free of hollow fiber membranes 2, with the hollow fiber membranes 2 forming the walls of the vertical channels 16. The cassettes 10a can take the form of a pleated shape (Figure 8B), an undulating shape (Figure 8A) or a ridged shape (Figure 8C).

Figures 5C, 6C and 7B illustrate a plan view of the modular array 1 of the invention. The arrangement of the plurality of cassettes 10 or 10a aligned parallel to each other provides, in cross-section, a honeycomb structure of substantially enclosed, uniformly distributed, vertical channels 16, which are open and free of hollow fiber membranes 2.

An air delivery system 20 such as an aerator suitably adapted to deliver air bubbles into the open channels 16 is located at or below the base 18 of the channels 16. The air delivery system 20 can form part of the lower manifold 8, or it can be independent and located below the membrane array within the tank or bioreactor.

Due to the arrangement of the modular array 1 of the present invention, the enclosed vertical channels 16 create a clear path for the rising bubbles released from the nozzles of the air delivery system 20. The rising bubbles are completely surrounded with the wall 17 of membrane fibers 2 and the bubbles have intimate contact with the all of the membranes comprising the walls of the channel. This results in improved mixing and shear conditions and leads to improved process performance when they are used in membrane bioreactor applications. The bubbles induce a vertical flow of water within each channel 16, and pressure differences above and below the bubbles rising in a tubular flow will induce water flow through the wall of hollow membrane fibers 2, causing the fibers to move back and forth laterally, and enhance mass transfer.

Since the rising bubbles are completely surrounded by the walls of hollow membrane fiber 2 of each vertical channel 16, the energy dissipated by the rising bubbles is captured effectively. These conditions may be manipulated by altering the size and frequency of the bubbles rising within the channels 16, which can be controlled by adjusting the air flow-rate, and the timing of bubble release in adjacent channels 16. In this manner the interactions between bubbles, and the fluid movement they induce in adjacent channels 16, can be optimized for effective control of the shear conditions and improved mass transfer.

Figure 9 shows a variety of alternative designs of the membrane element 3 to that shown in Figure 3. It will be appreciated that, when these membrane elements 3 are staggered at an even distance along a cassette, and two or more cassettes are arranged in parallel so that these membrane elements 3 are staggered relative to each other as appropriate, an alternative embodiment of the modular membrane array of the invention is provided. Figure 9A shows a square membrane element design in which the membranes are potted so as to a form square shape with a hollow center. This figure also shows that, when these membrane elements are aligned in a staggered pattern, and touching as shown, they create the modular membrane array 1 of the invention having square, vertical, fiber-free channels uniformly distributed between the membranes. It should be noted that this design illustrates that the size of the vertical channels created in this manner may not all be exactly the same size.

Figure 9B shows a triangular membrane element design, in which the membranes are potted so as to a form triangular shape with a hollow center. This figure also shows that, when these membrane elements are aligned in a staggered pattern, and touching as shown, they create the modular membrane array 1 of the invention having triangular, vertical, fiber-free channels uniformly distributed between the membranes. As was the case in respect of Figure 9A, the design illustrates that the size of the vertical channels created in this manner may not all be exactly the same size.

Figure 9C shows how a conventional linear membrane could be modified to include evenly spaced linear membrane elements, arranged normally to, and staggered at an even distance along the linear membrane cassettes, so as to create a uniform distribution of square, fiber-free, vertical channels. Figure 9D shows an alternative arrangement, where conventional linear membrane cassettes could be alternated with a patterned pleated membrane cassette, so as to form a uniform membrane array of triangular vertical, fiber-free channels.

The modular array 1 of the present invention is suitable for use as a submerged membrane module that can be used for filtration in membrane bioreactors (MBRs) and/or for the aeration of wastewater in membrane aerated bioreactors (MABRs).

The hollow membrane fibers 2 generally have an outside diameter between 40 microns and 4mm, and a wall 17 thickness that ranges from 10 to 500 microns. The hollow membrane fibers 2 are sealed into the upper and lower manifolds 6, 8, to allow communication with the insides of the hollow fiber membranes 2, while excluding the water in which they are submerged.

The hollow membrane fibers 2 can have a tension which is taught. Alternatively, the fibers 2 can have a tension which is slack, in order to allow some fiber movement during the aeration process. In one embodiment of the invention, the relative distance between the upper manifold 6 and the lower manifold 8 in the cassette 10 is adjustable, in order to enable the tension to be changed to a desired value. The range of adjustment corresponds to a variation in the distance the membrane fibers are held apart when naturally hanging by their own weight from between 90% and 120% of the length.

The upper and lower manifolds 6, 8 are designed to remove purified water from the inside of the hollow fibers 2 if the array 1 used for filtration. In the case of gas permeable membrane modules, the upper and lower manifolds 6, 8 are designed to supply gas (air) to, or remove gas from, the insides of the hollow fiber membranes 2, to facilitate gas transfer between the membranes 2 and the surrounding water.

The present invention provides numerous advantages when compared to existing system. In particular, it enhances mass transfer and provides improved fouling control in water filtration applications. It also enhances substrate delivery, and allows better control of the shear conditions and biofilm thickness in membrane aerated bioreactor applications.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A modular membrane array (1) for use in water treatment or wastewater treatment systems, the array (1) comprising two or more cassettes (10;10A) aligned in parallel, each cassette (10;10A) comprising a bunch of vertically aligned, hollow fiber membranes (2), each membrane (2) defining a lumen configured to contain a fluid; wherein the alignment of the two or more cassettes (10;10A) in parallel forms substantially enclosed vertical channels (16) that are open and free of hollow fibre membranes (2).

2. A modular membrane array (1) as claimed in Claim 1, in which the array of vertically aligned, hollow fiber membranes (2) form walls (17) which separate the substantially enclosed vertical channels (16).

3. A modular membrane array (1) as claimed in Claim 1 or Claim 2, wherein each of the two or more cassettes (10;10A) have a pleated, ridged, angular, or undulating shape.

4. A modular membrane array (1) as claimed in any one of Claims 1 to 3, in which the two or more cassettes (10;10A) are complementary to each other.

5. A modular membrane array (1) as claimed in any one of Claims 1 to 4, further comprising a housing (21), wherein each cassette (10;10A) further comprises an upper manifold (8) attached to the housing (21) and a lower manifold (6) attached to the housing (21) and wherein the membranes (2) are further attached to moulded connectors (4), each moulded connector (4) being attached to the upper (8) and the lower (6) manifolds.

6. A modular membrane array (1) as claimed in Claim 5, in which each cassette (10) comprises a plurality of patterned membrane elements (3) arranged in sequence along the upper (8) and lower (6) manifolds, wherein each patterned membrane element (3) comprises a bunch of membranes, consisting of a plurality of hollow membranes (2) attached to the moulded connectors (4).

7. A modular membrane array (1) as claimed in Claim 5, in which each cassette (10A) comprises a continuous collection of single bunches of membranes (2) fixed along the entire length of the upper and lower moulded connectors (4) that are attached to the upper (8) and lower (6) manifolds and run their entire length.

8. A modular membrane array (1) as claimed in any one of the preceding Claims, in which an air delivery system (20) is configured to deliver air bubbles into the substantially enclosed vertical channels (16).

9. A modular membrane array (1) according to Claim 8, in which the air delivery system (20) is placed at or close to a base (18) of the modular membrane array (1) so as to release air bubbles at or below the base (18) of each of the vertical channels (16) within the modular membrane array (1) and to provide uniform mixing conditions throughout the modular array (1).

10. A modular membrane array (1) according to Claim 8 or Claim 9, in which the air delivery system (20) controls the air flow to adjacent vertical channels (16) so that the size and frequency of bubbles formed in adjacent vertical channels can be manipulated to control of shear flow conditions experienced by the hollow fiber membranes (2) comprising the walls (17) of the channels (16).

11. A modular membrane array (1) as claimed in any one of the preceding claims, in which the substantially enclosed vertical channels (16) are evenly spaced and uniformly distributed.

12. A modular membrane array (1) according to any of the preceding claims, in which the substantially enclosed vertical channels (16) bounded on all sides by the walls (17) of vertically aligned, hollow fiber membranes (2) can be square, triangular, circular, elliptical, trapezoidal, polygonal or any other similar shape.

13. A modular membrane array (1) according to any one of the preceding claims, in which the bunch of membrane fibres (2) arranged in the modular membrane array (1) are tightly potted or spaced apart to form the wall (17) to encourage water flow through the wall (17) and between the membranes (2).

14. A modular membrane array (1) according to Claim 13, in which the thickness of the wall is determined by the number, spacing, and diameter of the hollow membrane fibers (2) separating adjacent channels (16), and the size of the channels (16) so formed.

15. A modular membrane array (1) according to any one of the preceding claims, in which the hollow fiber membranes (2) include individual hollow fibers modified to incorporate spacers for maintaining a space between the membranes (2) forming the walls (17) of the array (1) so as to enhance water flow through the walls (17) and provide space for biofilm growth.
